# EUROPÄISCHE PATENTSCHRIFT

(11) **EP 2 602 137 B1**
(45) Veröffentlichungstag und Bekanntmachung des Hinweises auf die Patenterteilung: **10.10.2018**
(21) Anmeldenummer: 12005718.7
(22) Anmeldetag: 07.08.2012
(51) Int. Cl.: B60H 1/34

(54) **Luftauslassvorrichtung für den Innenraum eines Fahrzeugs**
Air outlet device for the interior of a motor vehicle
Dispositif de sortie d'air pour l'espace intérieur d'un véhicule automobile

(30) Priorität: 09.12.2011 DE 102011120877
(43) Veröffentlichungstag der Anmeldung: 12.06.2013
(73) Patentinhaber: Volkswagen Aktiengesellschaft, 38440 Wolfsburg (DE)
(72) Erfinder: Rottmann Johannes, 38376 Süpplingenburg (DE)

(56) Entgegenhaltungen:
- DE-B3-102009 003 816
- US-A1- 2002 094 774
- US-A1- 2011 154 850

## Beschreibung

Die vorliegende Erfindung betrifft eine Luftauslassvorrichtung für den Innenraum eines Fahrzeugs sowie eine Instrumententafel für ein Fahrzeug und ein Verfahren zur Beeinflussung der Strömungsrichtung eines Luftstroms mit Hilfe einer Luftauslassvorrichtung, wie z.B. in US2011/0154850 offenbart.

Luftauslassvorrichtungen sowie Verfahren zur Beeinflussung von Luftströmungen in einer Luftauslassvorrichtung sind bekannt. Zum Beispiel offenbart die deutsche Patentschrift DE 10 2009 003 816 B3 eine Luftdüse zur Verwendung in einem Kraftfahrzeug. Der in diesem Dokument beschriebenen Luftdüse wie auch anderen bekannten Luftauslassvorrichtungen ist gemeinsam, dass sie eine Vielzahl von Lamellen aufweisen. Insbesondere sind wenigstens drei Lamellen vorgesehen, die gemeinsam miteinander rotierbar sind. Das bedeutet, dass die einzelnen Lamellen insbesondere über eine Mechanik, zum Beispiel eine Kopplungsstange, miteinander verbunden sind, sodass die Verstellung einer Lamelle die Verstellung der weiteren Lamellen bedingt. Diese eine verstellbare Lamelle kann zum Beispiel eine Steuerlamelle sein. Bei bekannten Luftauslassvorrichtungen, die zur Beeinflussung der Strömungsrichtung eines Luftstroms geeignet sind, ist üblicherweise entscheidend, dass der Luftstrom über die gesamte Breite und Höhe ausreichend beeinflusst wird. Insbesondere die oberen und unteren Randbereiche des Luftstroms sind dabei wichtig. Würden diese Randbereiche nicht ausreichend beeinflusst, so würde ein sogenanntes Durchschießen auftreten, also ein unbeeinflusstes Austreten des Luftstroms in diesem Bereich. Dieser würde sich negativ auf die Beeinflussung der Luftströmung in anderen Bereichen auswirken oder diese sogar zunichte machen. Um den Randbereich zu beeinflussen sind in diesem Randbereich Lamellen notwendig. Um jedoch diese Lamellen in diesem Randbereich zur Verfügung zu stellen ist eine entsprechende geometrische Dimensionierung notwendig, da die Lamellen in diesem Randbereich in beiden Richtungen bis zum Rand des Luftkanals schwenken können müssen. Bei bekannten Vorrichtungen ist dementsprechend ein Mindestbauraum notwendig, um dieser strömungstechnischen Vorrausetzung Rechnung tragen zu können.

Nachteilig bei bekannten Luftauslassvorrichtungen ist es also, dass bei der gewünschten Qualität der Beeinflussung der Strömungsrichtung des Luftstroms eine entsprechend große Dimensionierung der Luftauslassvorrichtung notwendig ist. Dies verhindert zum einen eine kompakte Bauweise hinsichtlich der Höhe der übereinander angeordneten Lamellen, wie auch hinsichtlich der Einbautiefe, also der Tiefe in Strömungsrichtung der einzelnen Lamellen. Bei Fahrzeugen, bei welchen im Bereich der Luftauslassvorrichtungen zusätzlich zum Beispiel Airbagsysteme eingesetzt werden sollen, kann es zu einem Konflikt hinsichtlich der dafür notwendigen Bauräume kommen. Dementsprechend widersprechen sich häufig die Ansprüche an optischer Qualitätsanmutung, notwendigem Bauraum für Sicherheitseinrichtungen und hoher Wirksamkeit der Strömungsbeeinflussung des Luftstroms.

Es ist Aufgabe der vorliegenden Erfindung, die voranstehend beschriebenen Nachteile bekannter Luftauslassvorrichtungen zu beheben. Insbesondere ist es Aufgabe der vorliegenden Erfindung eine Luftauslassvorrichtung, eine Instrumententafel sowie ein entsprechendes Verfahren zur Verfügung zu stellen, mit deren Hilfe der Luftstrom in besonders vorteilhafter Weise beeinflussbar ist und gleichzeitig kleinere Abmessungen für den Bauraum benötigt werden.

Gelöst wird die voranstehende Aufgabe durch eine Luftauslassvorrichtung mit den Merkmalen des unabhängigen Anspruchs 1, eine Instrumententafel mit den Merkmalen des unabhängigen Anspruchs 10 und ein Verfahren mit den Merkmalen des unabhängigen Anspruchs 11. Weitere Details und Merkmale der Erfindung ergeben sich aus den Unteransprüchen, der Beschreibung und den Zeichnungen. Dabei gelten Merkmale und Details, die im Zusammenhang mit der erfindungsgemäßen Luftauslassvorrichtung beschrieben werden, selbstverständlich auch im Zusammenhang mit der erfindungsgemäßen Instrumententafel und dem erfindungsgemäßen Verfahren und jeweils umgekehrt, sodass bezüglich der Offenbarung zu den einzelnen Erfindungsaspekten stets wechselseitig Bezug genommen wird beziehungsweise werden kann.

Eine erfindungsgemäße Luftauslassvorrichtung für den Innenraum eines Fahrzeugs weist ein Gehäuse und zumindest zwei, relativ zum Gehäuse gemeinsam rotierbare Lamellen zur Beeinflussung der Strömungsrichtung eines Luftstroms auf. Die zwei Lamellen sind dabei übereinander angeordnet. Unter dieser Anordnung "übereinander" ist zu verstehen, dass die einzelnen Lamellenflächen zueinander benachbart, also im Wesentlichen einander gegenüberliegend angeordnet sind. Mit anderen Worten verlaufen die einzelnen Lamellen parallel oder im Wesentlichen parallel zueinander. In der vorliegenden Anmeldung wird eine Ausführung mit Lamellen beschrieben, die nach dem Einbau in einem Fahrzeug insbesondere im Wesentlichen horizontal verlaufen. Selbstverständlich kann eine erfindungsgemäße Luftauslassvorrichtung auch in einer anderen Ausrichtung, zum Beispiel mit im Wesentlichen vertikalen Lamellen, eingesetzt werden. Bei einer derart eingebauten Luftauslassvorrichtung würden demnach die übereinander angeordneten Lamellen im Gesamtsystem des Fahrzeugs als nebeneinander liegend zu bezeichnen sein. Die erfindungsgemäße Ausbildung der Luftauslassvorrichtung ist demnach unabhängig oder im Wesentlichen unabhängig von der, insbesondere nicht eingeschränkt auf die Ausrichtung der Vorrichtung nach dem Einbau in einem Fahrzeug.

Eine erfindungsgemäße Luftauslassvorrichtung zeichnet sich dadurch aus, dass zumindest eine der Lamellen eine Lagerung mit einer variierbaren Rotationsachse aufweist. Insbesondere sind zumindest drei Lamellen vorgesehen, wobei die unterste und die oberste Lamelle jeweils eine derartige Lagerung aufweisen. Diese Rotationsachse ist in einer Weise variierbar, sodass die unterste und/oder die oberste Lamelle unabhängig von der Verstellrichtung der Lamellen auf die benachbarte Lamelle zuschwenken. Das bedeutet, dass die äußersten Lamellen, also die oberste und/oder die unterste Lamelle, nur von der benachbarten Wandung weg, auf die gegenüberliegende, also die benachbarte, Lamelle zuschwenken. Die Rotationsachse unterscheidet sich dabei von Schwenkrichtung zu Schwenkrichtung, sodass sie sich verschiebt, um die erfindungsgemäße Verstellung der jeweiligen Lamelle zu ermöglichen. Dies führt dazu, dass die Abstände zwischen den einzelnen Lamellen je nach Schwenkrichtung variieren können. Damit wird jedoch erzielt, dass kein Nach-Außen-Schwenken der äußeren Lamellen, also der obersten Lamelle nach oben und/oder der untersten Lamelle nach unten, notwendig ist, um auch den Randbereich des Luftstroms zu beeinflussen. Vielmehr ist es ausreichend, dass die entsprechenden Lamellen jeweils nach innen, nämlich auf die benachbarte Lamelle zu, schwenken, um auch diesen Randbereich in erfindungsgemäßer Weise zu beeinflussen.

Auf diese Weise kann der nach oben und unten benötigte Bauraum verringert werden, da in dieser Richtung keine Schwenkbewegung der äußersten Lamellen durchgeführt werden muss. Gleichzeitig erfolgt jedoch unabhängig von der Verstellrichtung der jeweiligen Lamellen eine optimale Beeinflussung des Luftstroms im Randbereich der Luftströmung. Auf diese Weise kann einerseits eine geringe Bauhöhe in Richtung der übereinander angeordneten Lamellen, andererseits eine besonders geringe Einbautiefe durch die Verwendung einer Vielzahl von Lamellen erzielt werden. Trotz der Reduktion der Baumaße gelingt eine Verbesserung der Beeinflussung der Strömungsrichtung des Luftstroms, sodass sowohl die Beeinflussung des Luftstroms als auch der benötigte Bauraum optimiert werden können. Somit ist vorteilhaft auch die Kombination einer erfindungsgemäßen Luftauslassvorrichtung mit weiteren technischen Einrichtungen, insbesondere Sicherheitstechnik wie zum Beispiel Airbags, erleichtert.

Durch die Verwendung einer erfindungsgemäßen Luftauslassvorrichtung ist es darüber hinaus möglich zusätzlichen Bauraum zu schaffen, welcher als freier Bauraum mit weiteren Einbauten versehen werden kann. Insbesondere ist es möglich, in Strömungsrichtung des Luftstroms den Lamellen vorgelagert eine Abdichtklappe zu verwenden, die mit einer verbesserten Dichtwirkung den Luftstrom vollständig absperrt. So kann unabhängig von der Steuerung eines einzigen Ventilators für das gesamte Lüftungssystem der Luftauslass aus einer einzelnen Luftauslassvorrichtung entsprechend angepasst oder vollständig zum Erliegen gebracht werden.

Zur Ansteuerung der Verstellung der Lamellen kann eine einfache Hebelkinematik oder auch ein direkter Zugriff auf eine der Lamellen vorgesehen sein. Eine solche Lamelle ist zum Beispiel als Steuerlamelle zu bezeichnen und weist insbesondere in an sich bekannter Weise einen Angriffspunkt oder ein Handhabungselement auf, mit dessen Hilfe die Verstellung der Steuerlamelle erfolgen kann.

Für eine besonders positive Beeinflussung der Strömungsrichtung des Luftstroms ist vorzugsweise eine Überdeckung der einzelnen Lamellen in Strömungsrichtung vorgesehen. Diese beträgt insbesondere circa 0,5 mm in Strömungsrichtung. Durch eine erfindungsgemäße Ausführung einer Luftauslassvorrichtung ist diese Überdeckung in besonders einfacher Weise erzielbar und trotzdem eine besonders kompakte Baugeometrie möglich.

Bei der erfindungsgemäßen Luftauslassvorrichtung erfolgt die Variation der Rotationsachsen zwischen zwei vordefinierten Positionen der Rotationsachse. Diese vordefinierten Positionen sind, bezogen auf die Strömungsrichtung des Luftstroms, in den beiden Endbereichen der obersten und/oder der untersten Lamelle angeordnet. Das bedeutet in Bezug auf den Luftstrom, dass die vordefinierten Positionen für die Rotationsachse also im Wesentlichen vorne und hinten an der entsprechenden Lamelle sind. Diese Lage der Rotationsachsen ermöglicht es, eine Variation der Rotationsachse zwischen dem vorderen und dem hinteren Bereich der jeweiligen Lamelle vorzusehen. So kann beim Schwenken um den vorderen Bereich und beim Schwenken um den hinteren Bereich die entsprechende Schwenkrichtung dahingehend eingestellt werden, dass entweder im Uhrzeigersinn oder gegen den Uhrzeigersinn verschwenkt wird, bei einer Betrachtungsweise im Querschnitt der jeweiligen Lamelle. So ist sichergestellt, dass je nach Beeinflussungsrichtung der äußersten Lamelle, also der obersten und/oder der untersten Lamelle, ein Schwenken der jeweiligen äußersten Lamelle auf die benachbarte Lamelle zu erfolgt. Das Verschwenken auf die benachbarte Lamelle zu kann auch als ein Verschwenken nach innen bezeichnet werden. Durch das Vorsehen von explizit vordefinierten Rotationsachsen und deren Position, insbesondere von zwei solchen Positionen, kann die Konstruktionsweise und vor allem die Montage noch weiter vereinfacht und verbilligt werden. Auf diese Weise können aufwändige Konstruktionen hinsichtlich der Mechanik reduziert werden, da es nur zwei Rotationsachsen und definierte Postionen gibt.

Es kann ferner von Vorteil sein, wenn bei einer erfindungsgemäßen Luftauslassvorrichtung die Variation der Rotationsachsen der obersten und/oder der untersten Lamelle zueinander konträr oder im Wesentlichen konträr durchgeführt wird. Mit anderen Worten verschiebt sich die Rotationsachse insbesondere zwischen zwei Positionen, wobei die Verschiebung bei den jeweiligen äußersten Lamellen konträr also gegensätzlich zueinander erfolgt. Befindet sich bei einem Lamellenpaket mit mindestens drei Lamellen die Rotationsachse für eine Verstellung der obersten Lamelle zum Beispiel an der Vorderseite der obersten Lamelle, so wird gleichzeitig an der untersten Lamelle die Rotationsachse sich an der Rückseite dieser untersten Lamelle befinden. In umgekehrter Weise wird bei der obersten Achse um die hintere Rotationsachse rotiert, wenn bei der untersten Lamelle um die vordere Rotationsachse verschwenkt wird. Auf diese Weise wird eine parallele Beeinflussungsrichtung möglich, während eine unterschiedliche Schwenkrichtung dafür zugrunde gelegt wird. Dies erzwingt das erfindungsgemäße Zuschwenken auf die jeweils benachbarte Lamelle in besonders kostengünstiger Weise.

Es kann ebenfalls vorteilhaft sein, wenn im Rahmen der vorliegenden Erfindung eine Luftauslassvorrichtung vorgesehen ist, bei welcher die Bewegung eines Steuerelements, insbesondere einer Steuerlamelle, auf die Bewegung der obersten und/oder der untersten Lamelle derart übertragen wird, dass die Variation der Rotationsachsen durchgeführt wird. Unter der Kopplungsvorrichtung ist insbesondere eine mechanische Kopplungsvorrichtung zu verstehen. Diese Kopplungsvorrichtung dient dazu die gezielte Variation der Rotationsachse durchzuführen. Durch die Kopplung der Verstellbewegung mit der Variation der Rotationsachse wird dem Benutzer einer erfindungsgemäßen Luftauslassvorrichtung die Variation der Rotationsachse sozusagen abgenommen. Sie erfolgt automatisch durch die gewünschte Verstellung über das Steuerelement, insbesondere die Steuerlamelle. Man kann die Kopplungsvorrichtung auch als eine Verdopplung der Funktion der Verstellung bezeichnen, da sie die Verstellung der Steuerlamelle mit der Variation der Rotationsachse koppelt. Für eine solche Kopplungsvorrichtung sind unterschiedlichste Ausgestaltungsformen denkbar. Insbesondere mechanische Lösungen, wie zum Beispiel eine Hebelkinematik oder eine einfache oder mehrfache Kulissenführung mit entsprechenden in einer solchen Kulisse geführten Stiften, sind dabei im Rahmen der vorliegenden Erfindung denkbar. Entsprechende Beispiele werden noch näher erläutert.

Ein weiterer Vorteil ist es, wenn bei einer erfindungsgemäßen Luftauslassvorrichtung die Kopplungsvorrichtung wenigstens eine am Gehäuse vorgesehene Gehäuse-Kulissenführung und zumindest eine davon separate Lamellen-Kulissenführung aufweist, die relativ zueinander bewegbar sind. Insbesondere ist die Gehäuse-Kulissenführung relativ fest zum Gehäuse, und die Lamellen-Kulissenführung ist relativ bewegbar zum Gehäuse und zu dieser Gehäuse-Kulissenführung ausgebildet. Vorzugsweise sind die Kulissenführungen besonders flach ausgeführt, sodass sie im Wesentlichen senkrecht zur Erstreckung der jeweiligen Lamelle eine besonders flache Ausführungsform mit entsprechend wenig Bauraum erzielen. Durch die Anordnung im Wesentlichen senkrecht zu den Lamellen, also seitlich zu einer oder zu beiden Seiten der Lamellen, kann eine weitere Reduktion der Bautiefe und der Bauhöhe erzielt werden. Die Steuerlamelle, also das Steuerelement, ist dabei vorzugsweise direkt im Gehäuse gelagert, und kann von dort aus in solche Kulissenführungen eingreifen.

Vorzugsweise sind bei einer erfindungsgemäßen Luftauslassvorrichtung die oberste und/oder die unterste Lamelle und ein Steuerelement, insbesondere eine Steuerlamelle, jeweils zumindest mit einem Stift versehen, der in die jeweilige Kulissenführung eingreift. Dabei greift das Steuerelement mit seinem Stift vorzugsweise in die Gehäuse-Kulissenführung und in die Lamellen-Kulissenführung ein. Darüber hinaus greifen die Stifte der obersten und/oder der untersten Lamelle ebenfalls zumindest teilweise in die beiden Kulissenführungen ein. So kann eine Überlagerung der einzelnen Kulissenführungen stattfinden. Dies führt dazu, dass durch eine Bewegung des Steuerelements nicht nur die Steuerlamelle selbst verstellt wird, sondern darüber hinaus auch die Relativbewegung zwischen der Gehäuse-Kulissenführung und der Lamellen-Kulissenführung durchgeführt wird. Durch diese Relativbewegung werden die einzelnen Stifte in der Kulisse bewegt und eine entsprechende Bewegung der äußersten Lamellen erzeugt. Diese Bewegung erfolgt dabei in Abhängigkeit der jeweiligen Kulissenführung und der Überlagerung der beiden Kulissenführungen, sodass je nach Bewegungsrichtung unterschiedliche Rotationsachsen einstellbar, also variierbar, sind. Eine erfindungsgemäße Kombination von diesen zwei Kulissenführungen ist also eine besonders einfache und hinsichtlich des Bauraums besonders flache Ausführungsform einer erfindungsgenmäßen Kopplungsvorrichtung.

Weiter ist es vorteilhaft, wenn bei einer erfindungsgemäßen Luftauslassvorrichtung die oberste und/oder die unterste Lamelle jeweils zumindest drei Stifte aufweisen, wobei zumindest zwei Stifte Rotationsachsen zugeordnet sind und zumindest ein weiterer Stift sowohl in die Gehäuse-Kulissenführung als auch in die Lamellen-Kulissenführung eingreift. Dieser weitere Stift dient also dazu, dass eine Übertragung der Bewegung der beiden Kulissenführungen auf die unterste beziehungsweise die oberste Lamelle erfolgen kann. Durch eine Relativbewegung zwischen der Lamellen-Kulissenführung und der Gehäuse-Kulissenführung kann eine Überlagerung der beiden Bewegungen erzielt werden, sodass die Variation der Rotationsachsen über die zumindest zwei Stifte zuordenbar ist. Im Grundkonzept kann davon gesprochen werden, dass die Anzahl der Stifte um 1 größer ist, als die notwendige Anzahl der Rotationsachsen. Bevorzugt erfolgt aus Gründen der Komplexität bei einem erfindungsgemäßen Ausführen der vorgesehenen Luftauslassvorrichtung eine Reduktion auf zwei Rotationsachsen.

Bei einer erfindungsgemäßen Luftauslassvorrichtung kann es weiter vorteilhaft sein, wenn die Kopplungsvorrichtung, insbesondere die Lamellen-Kulissenführung, zumindest abschnittsweise eine plattenförmige Geometrie aufweist. Dies führt zu einer besonders flachen Bauweise, sodass die Gesamtkonstruktion einer erfindungsgemäßen Luftauslassvorrichtung hinsichtlich Gewicht und Herstellungskosten optimiert werden kann. Auch der notwendige Bauraum, insbesondere die benötigte Einbaubreite wird auf diese Weise reduziert.

Ein weiterer Gegenstand der vorliegenden Erfindung ist eine Instrumententafel für ein Fahrzeug, aufweisend zumindest eine erfindungsgemäße Luftauslassvorrichtung. Diese bringt dementsprechend die gleichen Vorteile mit sich, wie sie ausführlich hinsichtlich einer erfindungsgemäßen Luftauslassvorrichtung bereits erläutert worden sind. Eine Luftauslassvorrichtung der vorliegenden Erfindung ist dementsprechend einer solchen Instrumententafel direkt zugeordnet, beispielsweise mit dieser stoffschlüssig verbunden zum Beispiel durch Kunststoffverschweißen oder Verkleben. Bevorzugt ist auch ein nachträgliches Einbauen in die Instrumententafel denkbar, sodass ein Einsetzen von der Vorderseite oder der Rückseite in eine solche Instrumententafel möglich ist. Eine entsprechende kraft- oder formschlüssige Verbindung, zum Beispiel durch Verclipsen oder Verschrauben, ist dabei vorteilhaft.

Ein weiterer Gegenstand der vorliegenden Erfindung ist ein Verfahren zur Beeinflussung der Strömungsrichtung eines Luftstroms mithilfe einer Luftauslassvorrichtung, die insbesondere erfindungsgemäß ausgeführt ist. Ein solches Verfahren weist zumindest den Schritt der Variation der Rotationsachse einer untersten und/oder einer obersten Lamelle in einer Weise auf, dass die unterste und/oder die oberste Lamelle unabhängig von der Verstellrichtung der Lamellen auf die benachbarte Lamelle zuschwenkt. Durch diesen erfindungsgemäßen Schritt des Verfahrens birgt dieser die gleichen Vorteile mit sich, wie sie ausführlich hinsichtlich einer erfindungsgemäßen Luftauslassvorrichtung erläutert worden sind.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen:
- Figur 1: im Querschnitt eine Ausführungsform einer erfindungsgemäßen Luftauslassvorrichtung mit den Lamellen in Normalstellung,
- Figur 2a: die Ausführungsform der Figur 1 mit den Lamellen in einer ersten Beeinflussungsrichtung,
- Figur 2b: die Ausführungen der Figuren 1 und 2a mit einer Ausrichtung der Lamellen in einer zweiten Beeinflussungsrichtung,
- Figur 3: eine Ausführungsform einer erfindungsgemäßen Luftauslassvorrichtung mit einer Kopplungsvorrichtung,
- Figur 4a: die Ausführung der Figur 3 in einer Ablenkung bei 10°,
- Figur 4b: die Ausführungsform der Figur 3 mit einer Ablenkung bei 20°,
- Figur 4c: die Ausführungsform der Figur 3 mit einer Ablenkung von 35°,
- Figur 5a: die Ausführungsform der Figur 3 mit einer Ablenkung von -10°,
- Figur 5b: die Ausführungsform der Figur 3 mit einer Ablenkung von -20°,
- Figur 5c: die Ausführungsform der Figur 3 mit einer Ablenkung von -35° und
- Figur 6a, 6b, 6c: eine schematische schrittweise Darstellung in perspektivischer Ansicht des Aufbaus einer Ausführungsform einer erfindungsgemäßen Kulissenführung.

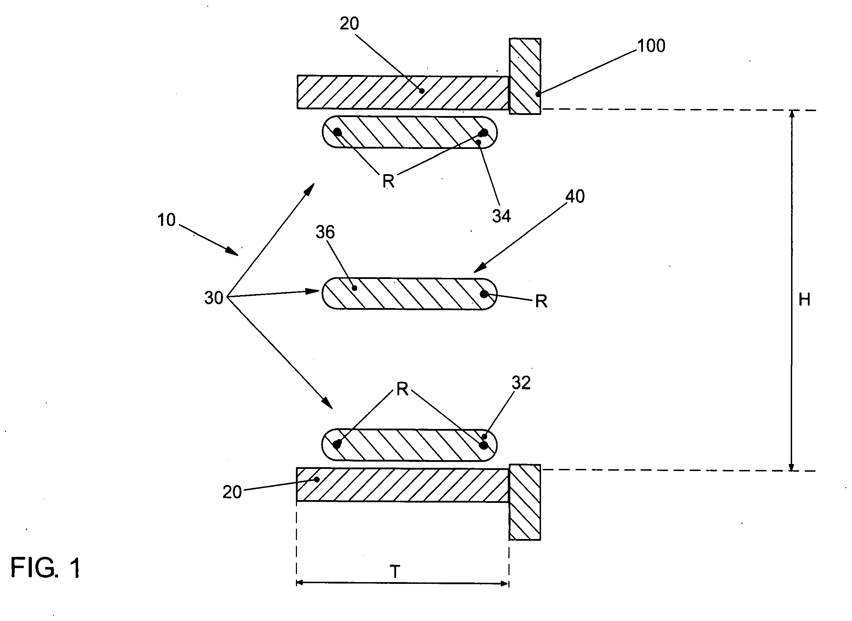

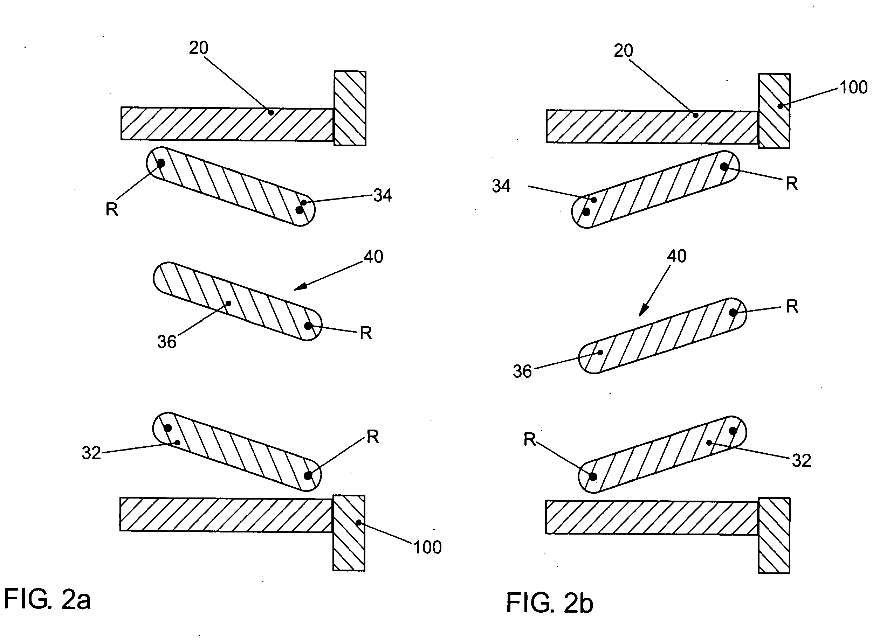

Anhand der Figuren 1, 2a und 2b soll kurz dargestellt werden wie die Variation der Rotationsachsen R bei einer Ausführungsform einer erfindungsgemäßen Luftauslassvorrichtung 10 durchgeführt wird. In Figur 1 ist in Neutralstellung eine Ausführungsform einer erfindungsgemäßen Luftauslassvorrichtung 10 dargestellt. Dort sind bei dieser Ausführungsform drei Lamellen 30 vorgesehen, wobei eine unterste Lamelle 32 und eine oberste Lamelle 34 jeweils den Abschluss zum Gehäuse 20 bilden. Die gesamte Luftauslassvorrichtung 10 ist dabei hinter der Instrumententafel 100 angesetzt. Eine der Lamellen 30 ist als Steuerlamelle 36 ausgebildet und dient somit als Steuerelement 40 für die Verstellung der Lamellen 30.

In erfindungsgemäßer Weise ist bei der Ausführungsform der Figur 1 die Luftauslassvorrichtung 10 mit der untersten Lamelle 32 und der obersten Lamelle 34 derart ausgebildet, dass die entsprechenden Rotationsachsen R variierbar sind. Demgegenüber handelt es sich bei der Steuerlamelle 36 um eine Lamelle 30, die eine einzige und nicht variierbare Rotationsachse R aufweist. Um die Luftauslassvorrichtung 10 dieser Ausführungsform hinsichtlich der Einbauhöhe H und der Einbautiefe T zu optimieren, sind die Rotationsachsen R der untersten Lamelle 32 und der obersten Lamelle 34 in einer Art und Weise variierbar, wie sie nachfolgend mit Bezug auf die Figuren 2a und 2b erläutert wird.

In Figur 2a ist eine erste Ausrichtung der Lamellen 30 zu erkennen. Sie führen den Luftstrom, welcher von der linken Seite herankommt, nach unten aus dem Kanal durch das Gehäuse 20 heraus. Dies führt dazu, dass sich für die beiden äußersten Lamellen 32 und 34 jeweils eine entsprechende Rotationsachse R einstellt. Bei der obersten Lamelle 34 handelt es sich dabei um die hintere Rotationsachse R, während es sich bei der untersten Lamelle 32 um die vordere Rotationsachse R handelt. Die Steuerlamelle 36 weist nur eine einzige Rotationsachse R auf, um welche diese Steuerlamelle 36 im Uhrzeigersinn nach oben verschwenkt wird. Die obere Steuerlamelle 34 wird dabei jedoch im Uhrzeigersinn um den hinteren Punkt der Rotationsachse R nach unten verschwenkt, während die untere Lamelle 32 um die vordere Rotationsache im Uhrzeigersinn ebenfalls nach oben verschwenkt wird.

Dreht sich nun die Bewegungsrichtung der Verstellung der Lamellen 30 um, so wird im Ergebnis eine Ausrichtung gemäß Figur 2b erzielt. Dabei durchlaufen die einzelnen Lamellen 30 in eine Position, wie sie als Neutralposition in Figur 1 dargestellt ist. In dieser Neutralposition gemäß Figur 1 wird die Rotationsachse R variiert oder umgestellt, sodass bei der obersten Lamelle 34 die Rotationsachse R von hinten nach vorne und bei der untersten Lamelle 32 von vorne nach hinten wandert. Dementsprechend schwenkt die Steuerlamelle 36 gegen den Uhrzeigersinn von oben nach unten und die oberste Lamelle 34 ebenfalls gegen den Uhrzeigersinn von oben nach unten. Bei der untersten Lamelle 32 wurde die Rotationsachse R nach hinten verschoben, sodass hier ein Verschwenken gegen den Uhrzeigersinn von unten nach oben erfolgt. Anhand der Figuren 2a und 2b ist gut zu erkennen, dass kein Parallelschwenken der untersten und der obersten Lamelle über die gesamte Verstellmechanik erfolgt. Vielmehr hängt es von der Richtung ab, ob ein gemeinsames Verschwenken parallel oder entgegen der benachbarten Lamelle, hier für beide äußerste Lamellen 32 und 34 die Steuerlamelle 36, erfolgt. In jedem Fall schwenkt jedoch die äußerste Lamelle 32 und 34 in allen Verstellsituationen immer auf die benachbarte Lamelle 30, hier die Steuerlamelle 36, zu.

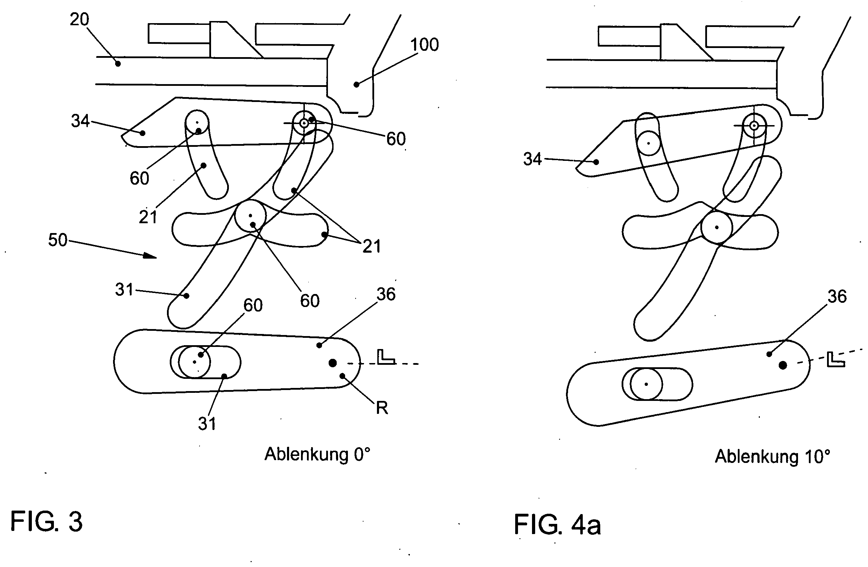

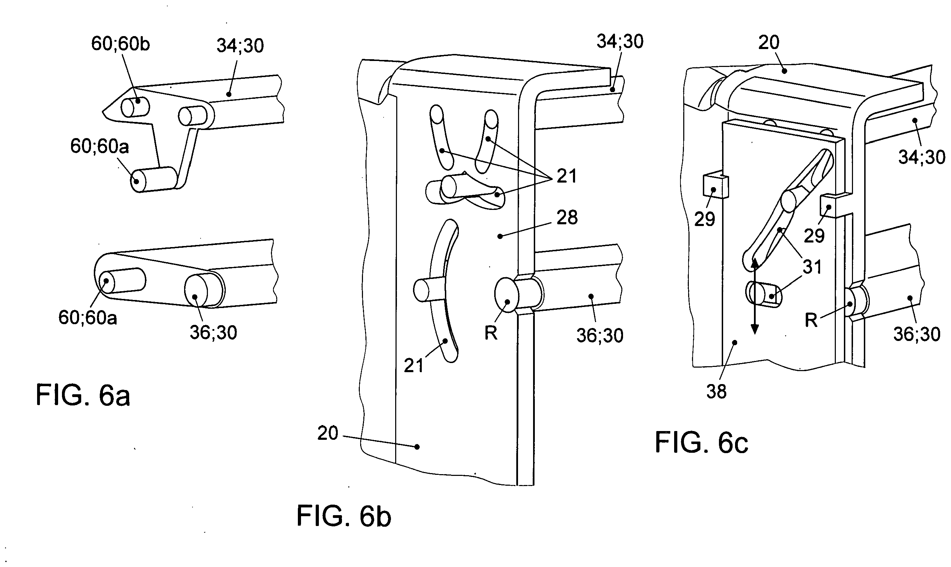

Dies kann in unterschiedlicher mechanischer Weise gelöst werden. Eine derartige Variante ist zum Beispiel in den Figuren 6a, 6b, 6c beziehungsweise in den Figuren 3 bis 5c dargestellt. Die Figuren 6a, 6b, 6c bilden zusammen eine schematische schrittweise Darstellung des Aufbaus eines Ausführungsbeispiels einer erfindungsgemäßen Kulissenführung in perspektivischer Ansicht. Figur 6a zeigt zunächst zwei Lamellen 30 einer Ausführungsform einer erfindungsgemäßen Luftauslassvorrichtung 10. Von der Luftauslassvorrichtung 10 ist in der Figur 6a zunächst nur eine äußerste Lamelle, nämlich die oberste Lamelle 34, sowie eine Steuerlamelle 36 gezeigt. Jede der beiden in Figur 6a gezeigten Lamellen 30 ist mit Führungsstiften 60 versehen. In der Figur 6b ist zusätzlich zu den beiden Lamellen 30 ein Teilabschnitt des zugehörigen Gehäuses 20 skizziert. Ein Wandbereich des Gehäuses 20 bildet, wie in der Figur 6b demonstriert, die Gehäuse-Kulissenführung 21 aus, indem die Wand des Gehäuses 20 mit Führungsschlitzen versehen ist. Die Rotationsachse R der Steuerlamelle 36 ist mittels eines. Rotationslagers im Gehäuse 20 gelagert, erstreckt sich dabei aber nicht über die Wand des Gehäuses 20 hinaus. Hingegen ragt ein längerer Stift 60a der Steuerlamelle 36 über die Gehäuse-Kulissenführung 21 hinaus. Ferner weist die Gehäuse-Kulissenführung 21 drei einzelne Führungsschlitze auf, in denen jeweils Stifte 60 der äußersten - nämlich obersten - Lamelle 34 geführt sind. Dabei ragt ein längerer Stift 60a der obersten Lamelle 34 über die Gehäuse-Kulissenführung 21 hinaus, während zwei kürzere Stifte 60b sich nicht über die Wand des Gehäuses 20 hinaus erstrecken. Im letzten Aufbauschritt ist nun, wie in Figur 6c dargestellt, nach außen angrenzend über die Gehäuse-Kulissenführung 21 eine weitere Kulissenführung, nämlich eine Lamellen-Kulissenführung 31 gelegt. Die Lamellen-Kulissenführung 31 wird durch Führungsschlitze in einem plattenförmig ausgebildeten Lamellen-Führungsblock 38 ausgebildet, der schiebebeweglich am Gehäuse-Führungsbereich 28 des Gehäuses 20 gehaltert ist. Dazu ist der Lamellen-Führungsblock 38, wie in Figur 6c gezeigt, mittels mehrerer Haltehaken 29 derart am Gehäuse 20 gehaltert, dass er parallel zum Gehäuse-Führungsbereich 28 verschoben werden kann, sich aber nicht von diesem ablösen kann. Die Lamellen-Kulissenführung 31 wirkt - ebenso wie die Gehäuse-Kulissenführung 21 - im Ausführungsbeispiel mit den beiden längeren Stiften 60a zusammen, die mit jeweiligen Lamellen 30, also der obersten Lamelle 34 und der Steuerlamelle 36 verbunden sind. Die kürzeren Stifte 60b der oberen Lamelle 34 sowie die Rotationsachse R der Steuerlamelle 36 sind hingegen kürzer bemessen, so dass sie ausschließlich in die Gehäuse-Kulissenführung 21 eingreifen und nicht mehr in die - in Figur 6c davor angeordnete - Lamellen-Kulissenführung 31. Die Figuren 3 bis 5c zeigen schematisch die entsprechende Korrelation dieser Kopplungsvorrichtung 50 und der jeweiligen Stifte 60.

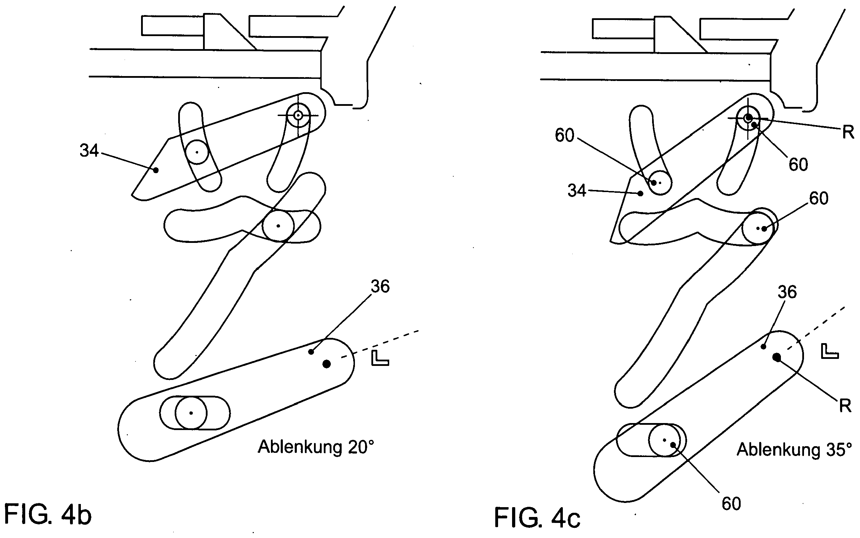

In Figur 3 ist schematisch eine Neutralposition dargestellt, wie sie korrespondierend zur Figur 1 verstanden werden kann. In dieser Stellung befinden sich die Lamellen in unbeeinflussender Richtung also in Geradeausposition bezogen auf die Strömungsrichtung des Luftstroms. Schematisch angedeutet ist die Führung der Lamellen-Kulissenführung 31, welche sich im Eingriff sowohl mit dem einzigen Stift 60 der Steuerlamelle 36 und einem der drei Stifte 60 der obersten Lamelle 34 befindet. In den Figuren 4a bis 4c wird eine Ablenkung der Lamellen nach 30 nach unten dargestellt. Dabei sind unterschiedliche Ablenkungsgrade, nämlich von 10°, über 20° bis 35° dargestellt. Wie aus diesen Figuren zu erkennen ist, wird für diese Verschwenkungsrichtung die vordere Rotationsachse R der äußersten, obersten Lamelle 34 verwendet. Durch eine Relativbewegung der Lamellen-Kulissenführung 31 zur Gehäuse-Lamellenführung 21 wird dabei der Stift 60 der äußersten Lamelle 34 derart in der entsprechenden Führung der Lamellen-Kulissenführung 31 bewegt, dass darüber hinaus auch eine Bewegung in der Gehäuse-Kulissenführung 21 erfolgt. Auf diese Weise erfolgt ein Verkippen der obersten Lamelle 34 um die vordere Rotationsachse R. Diese gesamte Bewegung wird durch die Steuerlamelle 36 als Steuerelement 40 erzeugt. Der Nutzer einer erfindungsgemäßen Luftauslassvorrichtung 10 muss also nur die Steuerlamelle 36 bewegen und über die Kopplungsvorrichtung 50, in diesem Fall also über die Gehäuse-Kulissenführung 21 und die Lamellen-Kulissenführung 31, erfolgt die entsprechende Kopplung zur Bewegung der äußersten Lamellen 34 und 32 automatisch.

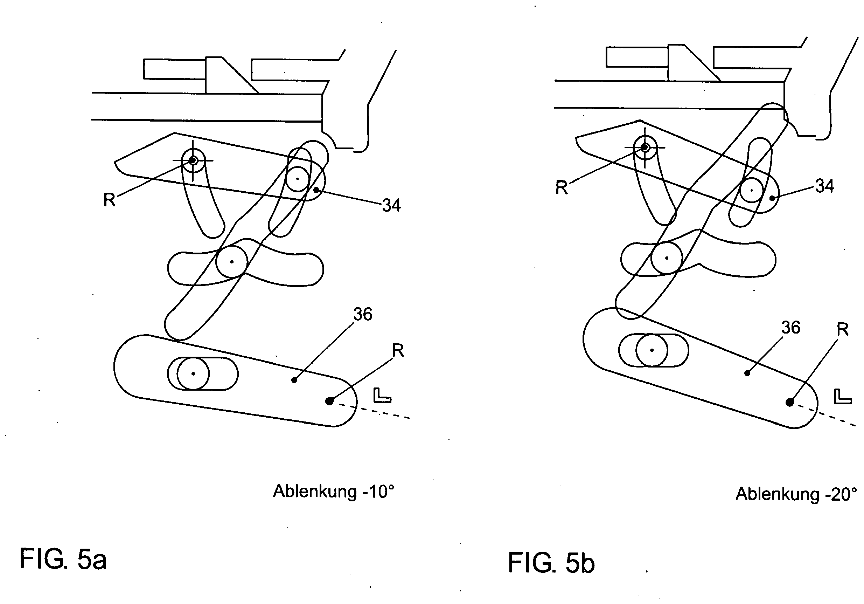

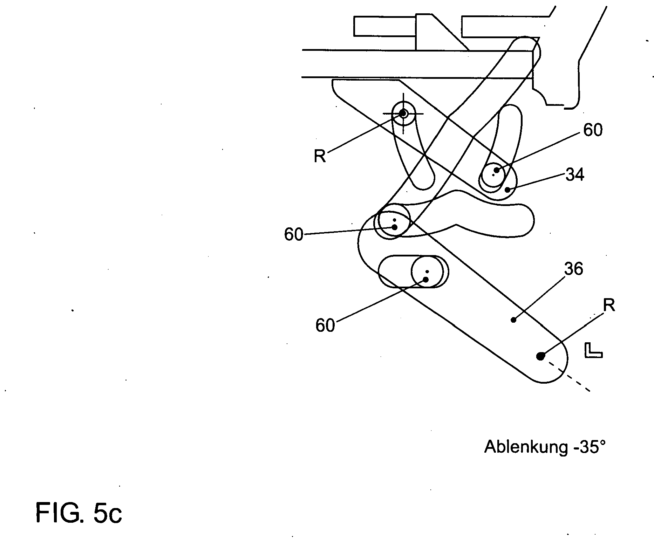

In den Figuren 5a bis 5c ist die entgegengesetzte Verschwenkungsrichtung, also mit Ablenkungsgraden von -10°, -20° und -35° dargestellt. Im Wesentlichen ist hier die gleiche Funktionalität zugrundezulegen, jedoch bewegt sich der unterste Stift 60 der obersten Lamelle 34 hier in der Gehäuse-Kulissenführung 21 in die andere Richtung, nämlich in den Figuren 5a bis 5c nach links. Auf diese Weise erfolgt ein Verkippen um den anderen Stift 60 der obersten Lamelle 34, sodass die hintere Rotationsachse R ausgewählt wird. Die Rotationsachsen R der obersten Lamelle 34 werden also zwischen den beiden durch die jeweiligen obersten Stifte 60 der äußersten Lamelle 34 definierten Positionen, variiert.

Die voranstehende Beschreibung der Ausführungsformen behandelt die vorliegende Erfindung ausschließlich im Rahmen von Beispielen. Dementsprechend können einzelne Merkmale aus diesen Ausführungsformen, sofern technisch sinnvoll, frei miteinander kombiniert werden ohne den Rahmen der vorliegenden Erfindung zu verlassen.

### Bezugszeichenliste

- 10: Luftauslassvorrichtung
- 20: Gehäuse
- 21: Gehäuse-Kulissenführung
- 28: Gehäuse-Führungsbereich
- 29: Haltehaken
- 30: Lamellen
- 31: Lamellen-Kulissenführung
- 32: unterste Lamelle
- 34: oberste Lamelle
- 36: Steuerlamelle
- 38: Lamellen-Führungsblock
- 40: Steuerelement
- 50: Kopplungsvorrichtung
- 60: Stift
- 60a: längerer Stift
- 60b: kürzerer Stift
- 100: Instrumententafel

- R: Rotationsachse
- H: Einbauhöhe
- T: Einbautiefe

## Patentansprüche

1. Luftauslassvorrichtung (10) für den Innenraum eines Fahrzeugs, aufweisend ein Gehäuse (20) und zumindest zwei, relativ zu dem Gehäuse (20) gemeinsam rotierbare, übereinander angeordnete Lamellen (30) zur Beeinflussung der Strömungsrichtung eines Luftstroms, wobei zumindest eine der Lamellen (32, 34) eine Lagerung mit einer variierbaren Rotationsachse (R) aufweist, so dass die unterste (32) und/oder die oberste Lamelle (34) unabhängig von der Verstellrichtung der Lamellen (30) auf die benachbarte Lamelle (30) zuschwenkt, wobei die Variation der Rotationsachsen (R) zwischen zwei vordefinierten Positionen der Rotationsachse (R) erfolgt, die, bezogen auf die Strömungsrichtung des Luftstroms, in den beiden Endbereichen der obersten (34) und/oder der untersten Lamelle (32) angeordnet sind.

2. Luftauslassvorrichtung (10) nach dem vorangegangenen Anspruch, **gekennzeichnet durch** zumindest drei, relativ zu dem Gehäuse (20) gemeinsam rotierbare, übereinander angeordnete Lamellen (30) zur Beeinflussung der Strömungsrichtung eines Luftstroms, wobei die unterste (32) und die oberste Lamelle (34) jeweils eine Lagerung mit einer variierbaren Rotationsachse (R) aufweisen, so dass die unterste (32) und die oberste Lamelle (34) unabhängig von der Verstellrichtung der Lamellen (30) auf eine benachbarte Lamelle (30) zuschwenken.

3. Luftauslassvorrichtung (10) nach einem der vorangegangenen Ansprüche, **dadurch gekennzeichnet, dass** die Variation der Rotationsachsen (R) der obersten (34) und/oder der untersten Lamelle (32) zueinander konträr oder im Wesentlichen konträr durchgeführt wird.

4. Luftauslassvorrichtung (10) nach einem der vorangegangenen Ansprüche, **dadurch gekennzeichnet, dass** für die oberste (34) und/oder die unterste Lamelle (32) jeweils zumindest eine Kopplungsvorrichtung (50) vorgesehen ist, welche die Bewegung eines Steuerelements (40), insbesondere einer Steuerlamelle (36), auf die Bewegung der obersten (34) und/oder der untersten Lamelle (32) derart überträgt, dass die Variation der Rotationsachsen (R) durchgeführt wird.

5. Luftauslassvorrichtung (10) nach Anspruch 4, **dadurch gekennzeichnet, dass** die Kopplungsvorrichtung (50) wenigstens eine am Gehäuse (20) vorgesehene Gehäuse-Kulissenführung (21) und zumindest eine davon separate Lamellen-Kulissenführung (31) aufweist, die relativ zueinander bewegbar sind.

6. Luftauslassvorrichtung (10) nach Anspruch 5, **dadurch gekennzeichnet, dass** die oberste (34) und/oder die unterste Lamelle (32) und ein Steuerelement (40), insbesondere eine Steuerlamelle (36), jeweils zumindest einen Stift (60) aufweisen, der zumindest in die jeweilige Kulissenführung (21, 31) eingreift.

7. Luftauslassvorrichtung (10) nach Anspruch 6, **dadurch gekennzeichnet, dass** die oberste (34) und/oder die unterste Lamelle (32) jeweils zumindest drei Stifte (60) aufweisen, wobei zumindest zwei Stifte (60) den Rotationsachsen (R) zugeordnet sind und zumindest ein weiterer Stift (60) sowohl in die Gehäuse-Kulissenführung (21), als auch in die Lamellen-Kulissenführung (31) eingreift.

8. Luftauslassvorrichtung (10) nach einem der Ansprüche 4 bis 7, **dadurch gekennzeichnet, dass** die Kopplungsvorrichtung (50), insbesondere die Lamellen-Kulissenführung (21), zumindest abschnittsweise eine plattenförmige Geometrie aufweist.

9. Instrumententafel (100) für ein Fahrzeug, aufweisend zumindest eine Luftauslassvorrichtung (10) mit den Merkmalen eines der Ansprüche 1 bis 8.

10. Verfahren zur Beeinflussung der Strömungsrichtung eines Luftstroms mit Hilfe einer Luftauslassvorrichtung (10), aufweisend die Merkmale eines der Ansprüche 1 bis 8, umfassend zumindest den Schritt einer Variation der Rotationsachse (R) einer untersten (32) und/oder einer obersten Lamelle (34) derart, dass die unterste (32) und/oder die oberste Lamelle (34) unabhängig von der Verstellrichtung der Lamellen (30) auf die benachbarte Lamelle (30) zuschwenkt.

11. Verfahren nach Anspruch 10, **dadurch gekennzeichnet, dass** das Verfahren mit Hilfe einer Luftauslassvorrichtung (10), insbesondere aufweisend
die Merkmale eines der Ansprüche 2 bis 8, ausgeführt wird und den Schritt einer Variation der Rotationsachse (R) einer untersten (32) und einer obersten Lamelle (34) umfasst derart, dass die unterste (32) und die oberste Lamelle (34) unabhängig von der Verstellrichtung der Lamellen (30) auf die benachbarte Lamelle (30) zuschwenken.

## Claims

1. Air outlet device (10) for the interior of a vehicle, comprising a housing (20) and at least two louvers (30), which are rotatable together relative to the housing (20) and are arranged one above another, for influencing the direction of flow of an air flow, wherein at least one of the louvers (32, 34) has a mounting with a variable axis of rotation (R), and therefore the lowermost louver (32) and/or the uppermost louver (34) pivot/pivots towards the adjacent louver (30) irrespective of the direction of adjustment of the louvers (30), wherein the variation of the axes of rotation (R) takes place between two predefined positions of the axis of rotation (R) that are arranged, with respect to the direction of flow of the air flow, in the two end regions of the uppermost louver (34) and/or of the lowermost louver (32).

2. Air outlet device (10) according to the preceding claim, **characterized by** at least three louvers (30), which are rotatable together relative to the housing (20) and are arranged one above another, for influencing the direction of flow of an air flow, wherein the lowermost louver (32) and the uppermost louver (34) each have a mounting with a variable axis of rotation (R), and therefore the lowermost louver (32) and the uppermost louver (34) pivot towards an adjacent louver (30) irrespective of the direction of adjustment of the louvers (30).

3. Air outlet device (10) according to either of the preceding claims, **characterized in that** the variation of the axes of rotation (R) of the upper-most louver (34) and/or of the lowermost louver (32) with respect to each other is carried out oppositely or substantially oppositely.

4. Air outlet device (10) according to one of the preceding claims, **characterized in that** at least one coupling device (50) is provided in each case for the uppermost louver (34) and/or the lowermost louver (32), which coupling device transmits the movement of a control element (40), in particular of a control louver (36), to the movement of the uppermost louver (34) and/or of the lowermost louver (32) in such a manner that the variation of the axes of rotation (R) is carried out.

5. Air outlet device (10) according to Claim 4, **characterized in that** the coupling device (50) has at least one housing slotted guide mechanism (21) which is provided on the housing (20) and at least one louver slotted guide mechanism (31) which is separate therefrom, which slotted guide mechanisms are movable relative to each other.

6. Air outlet device (10) according to Claim 5, **characterized in that** the uppermost louver (34) and/or the lowermost louver (32) and a control element (40), in particular a control louver (36), each have at least one pin (60) which engages at least in the respective slotted guide mechanism (21, 31).

7. Air outlet device (10) according to Claim 6, **characterized in that** the uppermost louver (34) and/or the lowermost louver (32) each have at least three pins (60), wherein at least two pins (60) are assigned to the axes of rotation (R) and at least one further pin (60) engages both in the housing slotted guide mechanism (21) and in the louver slotted guide mechanism (31).

8. Air outlet device (10) according to one of Claims 4 to 7, **characterized in that** the coupling device (50), in particular the louver slotted guide mechanism (21), has a plate-like geometry at least in sections.

9. Instrument panel (100) for a vehicle, having at least one air outlet device (10) with the features of one of Claims 1 to 8.

10. Method for influencing the direction of flow of an air flow with the aid of an air outlet device (10), having the features of one of Claims 1 to 8, comprising at least the step of varying the axis of rotation (R) of a lowermost louver (32) and/or of an uppermost louver (34) in such a manner that the lowermost louver (32) and/or the uppermost louver (34) pivot/pivots towards the adjacent louver (30) irrespective of the direction of adjustment of the louvers (30).

11. Method according to Claim 10, **characterized in that** the method is carried out with the aid of an air outlet device (10), in particular having the features of one of Claims 2 to 8, and comprises the step of varying the axis of rotation (R) of a lowermost louver (32) and/or of an uppermost louver (34) in such a manner that the lowermost louver (32) and/or the uppermost louver (34) pivot/pivots towards the adjacent louver (30) irrespective of the direction of adjustment of the louvers (30).

## Revendications

1. Dispositif de sortie d'air (10) pour l'espace interne d'un véhicule, présentant un boîtier (20) et au moins deux lamelles (30) disposées l'une au-dessus de l'autre, pouvant tourner ensemble par rapport au boîtier (20), pour influencer le sens d'écoulement d'un flux d'air, au moins l'une des lamelles (32, 34) présentant un support sur palier avec un axe de rotation variable (R) de telle sorte que la lamelle inférieure (32) et/ou la lamelle supérieure (34) pivotent indépendamment du sens de réglage des lamelles (30) vers la lamelle adjacente (30), la variation des axes de rotation (R) s'effectuant entre deux positions prédéfinies de l'axe de rotation (R) qui sont disposées par rapport au sens d'écoulement du flux d'air dans les deux régions d'extrémité de la lamelle supérieure (34) et/ou de la lamelle inférieure (32) .

2. Dispositif de sortie d'air (10) selon la revendication précédente, **caractérisé par** au moins trois lamelles (30) disposées les unes au-dessus des autres, pouvant tourner ensemble par rapport au boîtier (20), pour influencer le sens d'écoulement d'un flux d'air, la lamelle inférieure (32) et la lamelle supérieure (34) présentant chacune un support sur palier avec un axe de rotation variable (R) de telle sorte que la lamelle inférieure (32) et la lamelle supérieure (34) pivotent indépendamment du sens de réglage des lamelles (30) vers une lamelle adjacente (30).

3. Dispositif de sortie d'air (10) selon l'une quelconque des revendications précédentes, **caractérisé en ce que** la variation des axes de rotation (R) de la lamelle supérieure (34) et/ou de la lamelle inférieure (32) est effectuée en sens contraire l'une de l'autre ou essentiellement en sens contraire.

4. Dispositif de sortie d'air (10) selon l'une quelconque des revendications précédentes, **caractérisé en ce que** l'on prévoit pour la lamelle supérieure (34) et/ou la lamelle inférieure (32) à chaque fois au moins un dispositif d'accouplement (50) qui transfère le mouvement d'un élément de commande (40), en particulier d'une lamelle de commande (36), au mouvement de la lamelle supérieure (34) et/ou de la lamelle inférieure (32) de telle sorte que la variation des axes de rotation (R) soit effectuée.

5. Dispositif de sortie d'air (10) selon la revendication 4, **caractérisé en ce que** le dispositif d'accouplement (50) présente au moins un guide à coulisse de boîtier (21) prévu sur le boîtier (20) et au moins un guide à coulisse de lamelle (31) séparé de celui-ci, lesquels peuvent être déplacés l'un par rapport à l'autre.

6. Dispositif de sortie d'air (10) selon la revendication 5, **caractérisé en ce que** la lamelle supérieure (34) et/ou la lamelle inférieure (32) et un élément de commande (40), en particulier une lamelle de commande (36), présentent chacun au moins une goupille (60) qui s'engage au moins dans le guide à coulisse respectif (21, 31).

7. Dispositif de sortie d'air (10) selon la revendication 6, **caractérisé en ce que** la lamelle supérieure (34) et/ou la lamelle inférieure (32) présentent à chaque fois au moins trois goupilles (60), au moins deux goupilles (60) étant associées aux axes de rotation (R) et au moins une goupille supplémentaire (60) s'engageant à la fois dans le guide à coulisse de boîtier (21) et dans le guide à coulisse de lamelle (31).

8. Dispositif de sortie d'air (10) selon l'une quelconque des revendications 4 à 7, **caractérisé en ce que** le dispositif d'accouplement (50), en particulier le guide à coulisse de lamelle (21) présente au moins en partie une géométrie en forme de plaque.

9. Tableau de bord (100) pour un véhicule, présentant au moins un dispositif de sortie d'air (10) ayant les caractéristiques de l'une quelconque des revendications 1 à 8.

10. Procédé pour influencer le sens d'écoulement d'un flux d'air à l'aide d'un dispositif de sortie d'air (10) présentant les caractéristiques de l'une quelconque des revendications 1 à 8, comprenant au moins l'étape d'une variation de l'axe de rotation (R) d'une lamelle inférieure (32) et/ou d'une lamelle supérieure (34) de telle sorte que la lamelle inférieure (32) et/ou la lamelle supérieure (34) pivotent indépendamment du sens de réglage des lamelles (30) vers la lamelle adjacente (30).

11. Procédé selon la revendication 10, **caractérisé en ce que** le procédé est mis en oeuvre à l'aide d'un dispositif de sortie d'air (10) présentant notamment les caractéristiques de l'une quelconque des revendications 2 à 8, et comprenant l'étape d'une variation de l'axe de rotation (R) d'une lamelle inférieure (32) et d'une lamelle supérieure (34) de telle sorte que la lamelle inférieure (32) et la lamelle supérieure (34) pivotent indépendamment du sens de réglage des lamelles (30) vers la lamelle adjacente (30).
